# EUROPÄISCHE PATENTSCHRIFT

(11) **EP 1 107 892 B1**
(45) Veröffentlichungstag und Bekanntmachung des Hinweises auf die Patenterteilung: **02.06.2004**
(21) Anmeldenummer: 99944546.3
(22) Anmeldetag: 28.08.1999
(51) Int. Cl.: B60S 9/08

(54) **STÜTZVORRICHTUNG**
SUPPORTING DEVICE
DISPOSITIF DE SUPPORT

(30) Priorität: 28.08.1998 DE 19839359
(43) Veröffentlichungstag der Anmeldung: 20.06.2001
(73) Patentinhaber: Jost-Werke GmbH & Co. KG, 60528 Frankfurt am Main (DE)
(72) Erfinder: ALGÜERA GALLEGO, José Manuel, D-63739 Aschaffenburg (DE); MÜLLER, Gerald, D-63179 Obertshausen (DE); PFISTER, Steffen, D-63225 Langen (DE)
(74) Vertreter: Fuchs Mehler Weiss & Fritzsche
(86) Internationale Anmeldenummer: PCT/EP1999/006338
(87) Internationale Veröffentlichungsnummer: WO 2000/012364

(56) Entgegenhaltungen:
- DE-A- 4 225 767
- DE-C- 4 024 825
- US-A- 5 423 518

## Beschreibung

Die Erfindung betrifft eine Stützvorrichtung für Sattelanhänger mit einer Außenhülse und einer mittels einer Spindel teleskopierbaren Innenhülse, an deren unteren Ende eine Fußaufnahmeeinrichtung zum Befestigen eines Stützfußes angebracht ist,
wobei die Fußaufnahmeeinrichtung ein die Innenhülse abschließendes Bauelement umfaßt.

Eine derartige Stützvorrichtung ist beispielsweise aus der EP-A-0 322 634 bekannt. Am unteren Ende des aus- bzw. einfahrbaren Stützenteils jeder Stütze ist ein eine Lagerbuchse tragendes Bauteil befestigt, z.B. angeschweißt. Dieses Bauteil weist zwei sich schräg nach unten und gegeneinander erstreckende Schenkel auf, an deren Längsrändern die Lagerbuchse angeschweißt ist. In der Lagerbuchse ist eine Hohlwelle drehbeweglich gelagert, auf der zwei Rollsegmente befestigt sind. Die Rollsegmente können mit ihrer Rollfläche auf der Fußplatte abrollen, wenn bei abgestelltem Sattelanhänger die Stützen nach vorne auswandern.

Diese Fußaufnahmeeinrichtung besitzt mehrere Nachteile. Dadurch, daß sich die Hohlwelle bzw. die Lagerbuchse über die gesamte Breite der Stütze erstreckt, stößt die Spindel im zusammengefahrenen Zustand der teleskopierbaren Innenhülse auf diese Lagerbuchse bzw. die minimale Länge der eingefahrenen Stützvorrichtung wird durch die Lagerbuchse begrenzt.

Ein weiterer Nachteil besteht darin, daß für jede Kombination Stützvorrichtungen/Stützfuß eine eigene Fußaufnahmeeinrichtung erforderlich ist.

Um den Freiraum für die Spindel im eingefahrenen Zustand etwas zu vergrößern, wurde bereits ein U-förmiger Bügel entwickelt, der mittels Bolzen oder Schrauben an der Innenhülse befestigt wird. Diese Ausgestaltung besitzt jedoch keine ausreichende Stabilität, so daß unter Umständen mehrere Platten erforderlich sind, die mit dem Innenrohr verbunden werden müssen. Dadurch wird die Herstellung äußerst aufwendig, wobei der Gewinn ein Freiraum für die Spindel minimal ist.

Aufgabe der Erfindung ist es, eine Stützvorrichtung zu schaffen, die einen größeren Freiraum für die Spindel aufweist, wobei die Fußaufnahmeeinrichtung eine hohe Stabilität besitzen soll. Ferner sollte die Fußaufnahmeeinrichtung auch für unterschiedliche Stützvorrichtungen/Stützfüße einsetzbar sein.

Diese Aufgabe wird mit einer Stützvorrichtung gelöst, bei der das Bauelement
- eine Öffnung für den Spindeldurchtritt,
- an ihrer Ober- und/oder Unterseite mindestens ein Versteifungselement und
- gegenüberliegend zwei Lagerstellen für den Stützfuß aufweist.

Durch die Öffnung, deren Lage an die Position der Spindel angepaßt ist und beispielsweise mittig oder exzentrisch vorgesehen sein kann, kann die Spindel ungehindert im eingefahrenen Zustand der Stützvorrichtung durch den Befestigungsbereich des Stützfußes hindurchtreten. Die minimale Länge der Stützvorrichtung wird somit erst durch den Fuß bzw. durch eine vorzugsweise unterhalb der Öffnung angeordnete Abdeckung definiert. Es wird dadurch eine kompakte Bauhöhe bei gleichzeitig längerer Spindel erreicht. Die Hubstrecke kann beispielsweise um 45-50 mm vergrößert werden.

Die üblicherweise mit einem einzigen Bolzen ausgebildete Schwenklagerung des Stützfußes wird erfindungsgemäß durch zwei Lagerstellen ersetzt, die seitlich der Durchtrittsöffnung angeordnet sind. Dadurch, daß die beiden Lagerstellen kein gemeinsames, die Lagerstellen verbindendes Bauteil aufweisen, wird der Freiraum für die Spindel nicht durch die Lagerung begrenzt.

Vorzugsweise ist das Versteifungselement innerhalb der Innenhülse angeordnet.

Um den Biegewiderstandsmoment im Bereich zwischen den Lagerstellen zu erhöhen, ist es von Vorteil, wenn sich das Versteifungselement mindestens zwischen den Lagerstellen erstreckt.

Das Bauelement ist gemäß einer Ausführungsform eine Platte, wobei das mindestens eine Versteifungselement eine Versteifungsrippe ist. Es hat sich gezeigt, daß durch eine oder mehrere Versteifungsrippen die erforderliche Biegefestigkeit erzielt werden kann, die beim Stand der Technik durch den durchgehenden Bolzen gewährleistet wird.

Die Versteifungsrippe/n an der Ober- und/oder Unterseite der Platte, die vorzugsweise einstückig an die Platte angeformt sein können, gewährleisten auf einfache Weise eine hohe Stabilität, ohne daß zusätzliche Bauteile erforderlich sind.

Vorteilhafterweise verläuft die Versteifungsrippe bogenförmig um die Durchtrittsöffnung. Aus Symmetriegründen ist es vorteilhaft, wenn wenigstens zwei Versteifungsrippen an der Ober- und/oder Unterseite der Platte vorgesehen sind.

Die Platte weist vorzugsweise einen außerhalb der Versteifungsrippe angeordneten Randabschnitt zur Befestigung der Innenhülse auf. Mittels dieses Randabschnittes kann die Fußaufnahmeeinrichtung an der Stirnfläche der Innenhülse beispielsweise verschweißt werden. Dieser Randabschnitt kann so dimensioniert sein, daß er bündig mit der Innenhülse abschließt. Es besteht aber auch die Möglichkeit, die Breite des Randabschnittes größer zu wählen, so daß Innenhülsen mit unterschiedlichen Durchmessern auf dem Randabschnitt befestigt werden können, so daß die Fußaufnahmeeinrichtung universell einsetzbar ist.

Die Lagerstelle ist vorzugsweise in der Plattenebene angeordnet, wobei insbesondere dann, wenn die Versteifungsrippen sich oberhalb und unterhalb der Platte befinden, eine besonders hohe Stabilität erzielt wird.

Gemäß einer weiteren Ausführungsform, bei der das Bauelement durch eine Platte gebildet wird, ist vorgesehen, daß an der Oberseite der Platte eine umlaufende Versteifungsrippe angeordnet ist, die formschlüssig in die Innenhülse eingreift und daß an der Unterseite eine umlaufende Rippe angeordnet ist, die in eine eine Abdeckung bildendes Bodenteil übergeht. Durch das Einpassen der Versteifungsrippe in die Innenhülse wird der Befestigungsbereich und somit die gesamte Stabilität der Fußaufnahmeeinrichtung verbessert. Hierzu trägt auch bei, daß die an der Unterseite angeordnete umlaufende Versteifungsrippe gegebenenfalls über einen Übergangsabschnitt in das Bodenteil übergeht.

Vorzugsweise besteht die Fußaufnahmeeinrichtung aus zwei Hälften, die spiegelbildlich sein können und vorzugsweise vor dem Einbau zusammengeschweißt werden. Die Ausführungsform in zwei Hälften bietet Vorteile in herstellungstechnischer Hinsicht.

Gemäß einer weiteren Ausführungsform ist das Bauelement ein senkrecht angeordnetes Rohr, dessen Außendurchmesser mindestens in einem oberen Abschnitt kleiner gleich dem Innendurchmesser der Innenhülse ist. Diese Ausführungsform hat den Vorteil, daß die Rohrwand gleichzeitig das obere und untere Versteifungselement bildet. Der Innenraum des Rohres bildet hierbei die Durchtrittsöffnung für die Spindel. Es wird dadurch eine besonders einfache Fußaufnahmeeinrichtung geschaffen.

Vorzugsweise ist das Rohr ein Vierkantrohr.

Wenn der Außendurchmesser gleich dem Innendurchmesser der Innenhülse ist, kann das Rohr auf einfache Weise in die Innenhülse eingesteckt werden, wobei ein entsprechend großer Anlagebereich zum Verschweißen mit der Innenhülse zur Verfügung steht.

Die Lagerstellen sind vorzugsweise an der Außenseite, insbsondere an der Außenseite des Rohres befestigt. Da die Belastungen der Stützvorrichtung sich in der tiefsten Stelle der Stützvorrichtung auswirken, ist eine möglichst weit außenliegende Anordnung der Lagerstellen von Vorteil.

Um Spritzwasser von der Spindel fernhalten zu können, kann die Durchtrittsöffnung durch eine an der Unterseite des Bauelementes angebrachte Abdeckung verschlossen sein. Diese Abdeckung kann integraler Bestandteil des Bauelementes sein oder als eigenständiges Bauteil beispielsweise angeschraubt sein.

Die Fußaufnahmeeinrichtung ermöglicht einen modularen Aufbau einer Stützvorrichtung, indem unterschiedliche Stützfußtypen montiert werden können, ohne daß aufwendige Umrüstmaßnahmen notwendig werden.

Beispielhafte Ausführungsformen der Erfindung werden nachfolgend anhand der Zeichnungen näher erläutert.

Es zeigen:
- Fig. 1: einen Vertikalschnitt durch die Fußaufnahmeeinrichtung,
- Fign. 2, 3 und 4: eine Draufsicht, einen Schnitt und eine Seitenansicht der Fußaufnahmeeinrichtung,
- Fign. 5a,b: eine perspektivische Darstellung sowie eine Schnittdarstellung einer weiteren Ausführungsform,
- Fign. 6a,b: einen Schnitt und eine Draufsicht auf eine weitere Ausführungsform,
- Fig. 6c: die in den Fign. 6a,b dargestellte Ausführungsform in eingebautem Zustand.

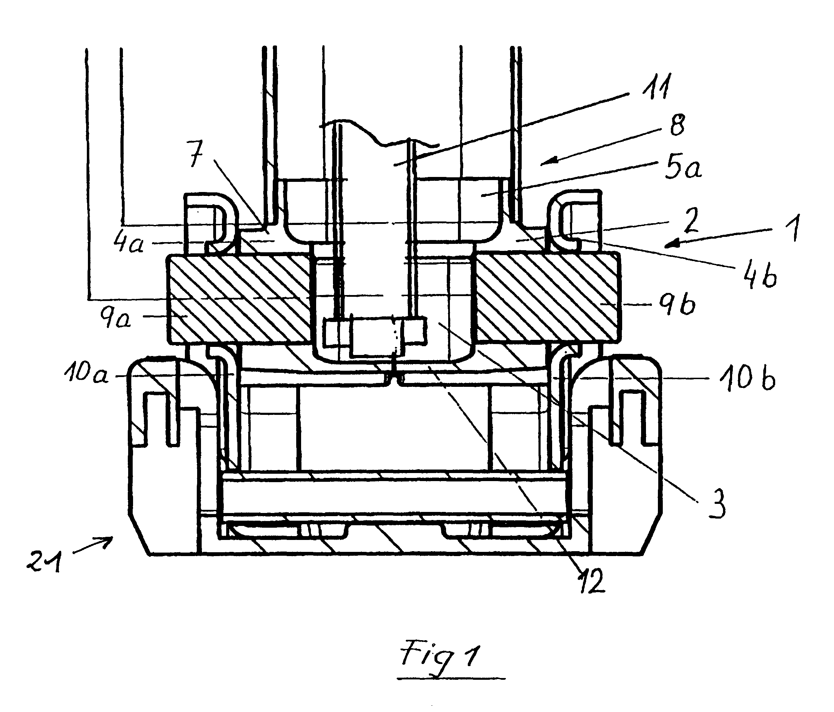

In der Fig. 1 ist eine Fußaufnahmeeinrichtung 1 dargestellt, die an der Unterseite einer Innenhülse 8 einer Stützvorrichtung angeordnet ist. Im Inneren der Innenhülse befindet sich die Spindel 11, die mit einem im oberen Teil der Stützvorrichtung angeordneten Getriebe (nicht dargestellt) verbunden ist, um die Innenhülse 8 teleskopieren zu können. Die Fig. 1 zeigt die Situation bei eingefahrener Innenhülse 8. Die entsprechende Außenhülse ist ebenfalls nicht dargestellt.

Die Fußaufnahmeeinrichtung 1 weist eine Platte 2 auf, die eine Öffnung 3 besitzt, durch die die Spindel 11 nach unten durchtreten kann. Im Innenbereich der Innenhülse 8 besitzt die Platte 2 an ihrer Oberseite zwei symmetrisch angeordnete obere Versteifungsrippen, von denen nur die Versteifungsrippe 5a zu sehen ist, die sich um die Öffnung 3 zwischen den Lagerstellen 4a,b erstreckt. An der Unterseite ist keine weitere Versteifungsrippe vorgesehen. Um die Öffnung 3 zu verschließen und die Spindel 11 vor Spritzwasser zu schützen, befindet sich an der Unterseite eine Abdeckung 12. Diese Abdeckung 12 kann ein separates Bauteil sein, sie kann aber auch einstückig mit der Platte 2 verbunden sein.

Benachbart zu der Öffnung 3 sind gegenüberliegend außen zwei Lagerstellen 4a und 4b angeordnet, in denen zwei Bolzen 9a und 9b gelagert sind, die die beiden Flansche 10a und 10b des nicht im einzelnen dargestellten Stützfußes 21 tragen.

In der Fig. 2 ist eine Draufsicht auf die Fußaufnahmeeinrichtung 1 dargestellt.

Die Öffnung 3 ist geringfügig exzentrisch in der Platte 2 angeordnet. Seitlich wird die Öffnung 3 von den beiden bogenförmigen Versteifungsrippen 5a,5b umgeben, die sich bis in den Bereich der Lagerstellen 4a und 4b erstrecken. Außerhalb der Versteifungsrippen 5a und 5b befindet sich der Randabschnitt 7 der Fußaufnahmeeinrichtung, an der die Innenhülse angeschweißt wird. Die Abmessungen des Randabschnitts 7 sind in der hier gezeigten Ausführungsform (Fig. 1) an die Abmessungen der Innenhülse 8 angepaßt, so daß der Randabschnitt 7 bündig mit der Innenhülse abschließt.

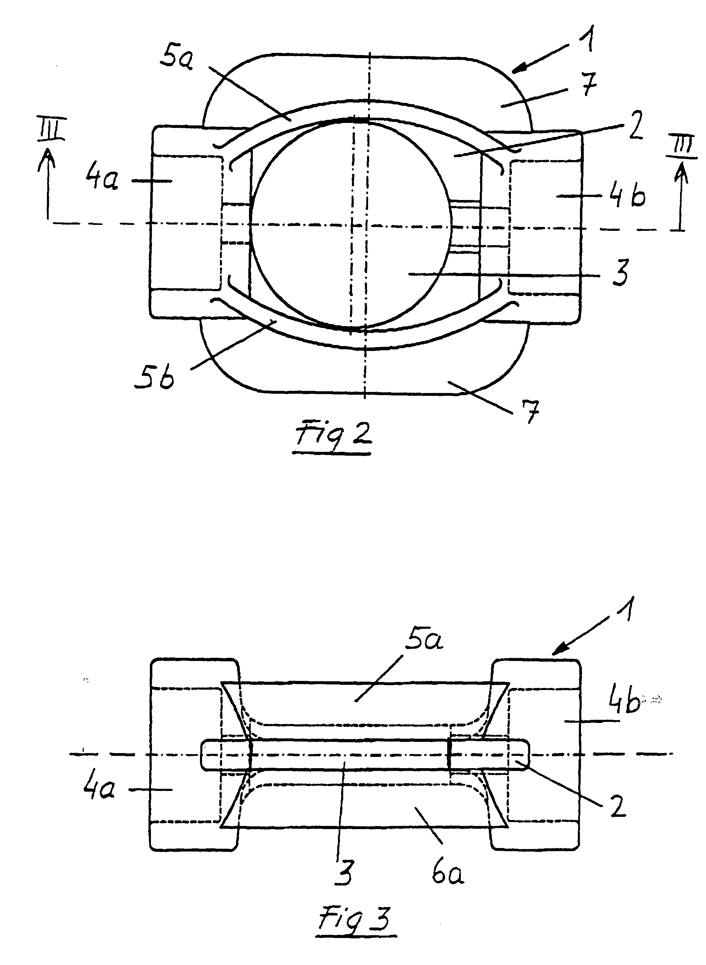

In der Fig. 3 ist ein Schnitt längs der Linie III - III in Fig. 2 durch die Fußaufnahmeeinrichtung 1 dargestellt. Zusätzlich zu den Versteifungsrippen 5a und 5b sind auch an der Unterseite zwei Versteifungsrippen vorgesehen, wovon die Versteifungsrippe 6a zu sehen ist. Entsprechend den oberen Versteifungsrippen 5a,b sind auch die unteren Versteifungsrippen 6a,b bogenförmig ausgebildet.

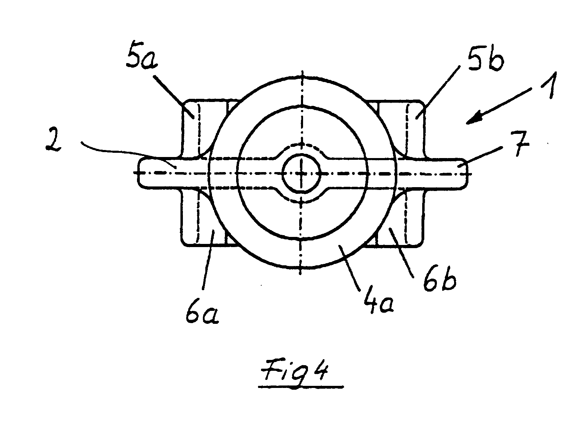

In der Fig. 4 ist die Seitenansicht dargestellt, aus der deutlich zu entnehmen ist, daß sich die Lagerstellen 4a,4b in der Ebene der Platte 2 befinden.

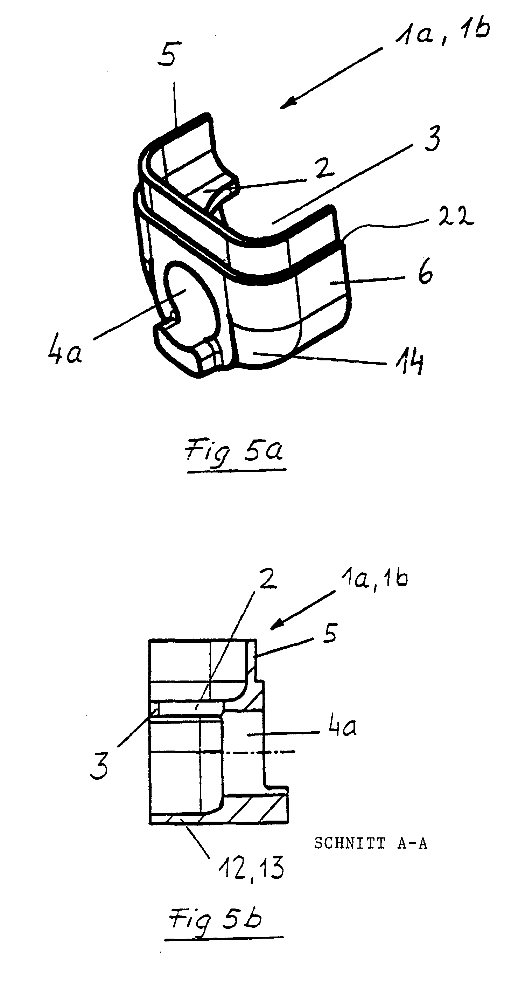

In den Fign. 5a und 5b ist eine weitere Ausführungsform dargestellt. Die Fußaufnahmeeinrichtung besteht aus zwei spiegelbildlichen Hälften 1a und 1b, wobei in den Fign. 5a und 5b nur die eine Hälfte 1a bzw. 1b dargestellt ist. Von der auf der Oberseite der Platte 2 angeordneten umlaufenden Rippe 5 ist ebenfalls nur die Hälfte dargestellt. Der Außendurchmesser dieser umlaufenden Rippe 5 entspricht dem Innendurchmesser der Innenhülse 8, so daß die Versteifungsrippe 5 an der Innenhülse anliegt. Nach unten setzt sich diese Versteifungsrippe in einer Schulter 22 fort, auf der die Stirnfläche der Innenhülse aufliegt. Unter der Platte 2 ist eine ebenfalls umlaufende Versteifungsrippe 6 angeordnet, die über einen gewölbten Abschnitt 14 in ein Bodenteil 13 übergeht, wie dies in der Fig. 5b zu sehen ist. Dieses Bodenteil 13 ist beabstandet unterhalb der Öffnung 3 angeordnet und verhindert das Eindringen von Spritzwasser.

Die Lagerstelle 4a mit einer entsprechenden Öffnung zur Aufnahme eines Bolzens für die Schwenklagerung eines Fußes ist in die untere Versteifungsrippe 6 eingearbeitet.

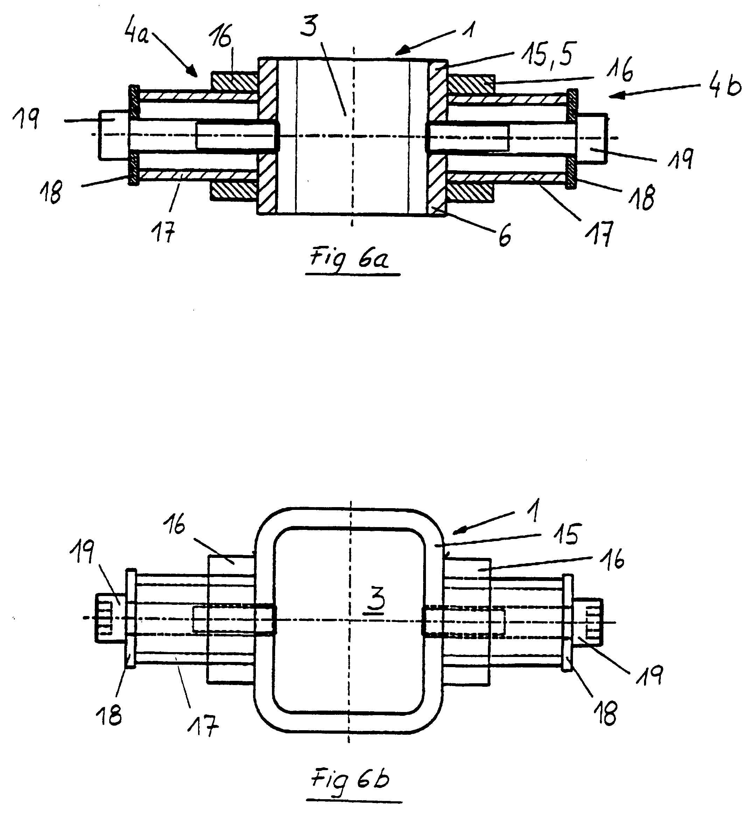

In den Fign. 6a und 6b ist eine weitere Ausführungsform der Fußaufnahmeeinrichtung 1 dargestellt. Das Bauelement besteht aus einem Rohr 15, das, wie die Fig. 6b zeigt, ein Vierkantrohr ist. Der Innenraum des Vierkantrohres 15 bildet die Durchtrittsöffnung 3 und die Rohrwand übernimmt gleichzeitig die Funktion der oberen Versteifungsrippe 5 und der unteren Versteifungsrippe 6. Die Lagerstellen 4a und 4b werden durch an der Außenseite des Rohres 15 befestigte Lagerrohrstücke 16 gebildet, in die wiederum zweite Lagerrohrstücke 17 eingesetzt und über eine Ringscheibe 18 und eine Schraube 19, die in das Rohr 15 eingeschraubt wird, gehalten.

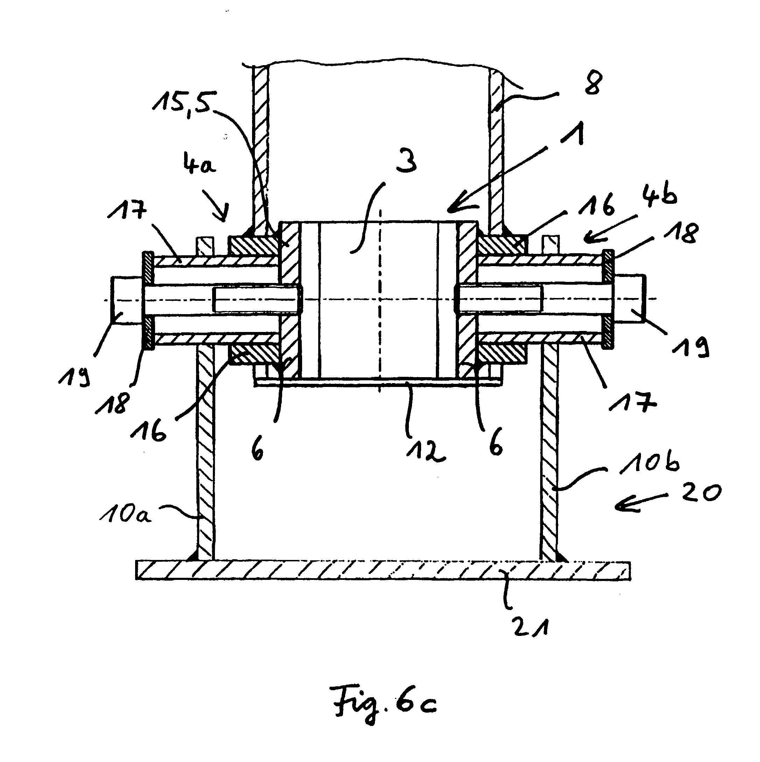

In der Fig. 6c ist die in der Fig. 6a und 6b dargestellte Ausführungsform im eingebauten Zustand zu sehen. Zusätzlich ist an der Unterseite des Rohres 15 eine Abdeckplatte 12 angeordnet. Die Innenhülse 8 ist an dem ersten Lagerrohrstück 16 angeschweißt. Ein Stützfuß 20 ist mit Fußplatte 21 und Fußflanschen 10a und 10b dargestellt, wobei die Fußflanschen 10a und 10b schwenkbar auf dem zweiten Lagerrohrstück 17 gelagert sind.

### Bezugszeichen

- 1: Fußaufnahmeeinrichtung
- 1a,b: Hälfte
- 2: Platte
- 3: Öffnung
- 4a,b: Lagerstelle
- 5,5a,b: obere Versteifungsrippe
- 6,6a,b: untere Versteifungsrippe
- 7: Randabschnitt
- 8: Innenhülse
- 9a,b: Bolzen
- 10a,b: Fußflansch
- 11: Spindel
- 12: Abdeckung
- 13: Bodenteil
- 14: gewölbter Abschnitt
- 15: Rohr
- 16: erstes Lagerrohrstück
- 17: zweites Lagerrohrstück
- 18: Ringscheibe
- 19: Schraube
- 20: Stützfuß
- 21: Fußplatte
- 22: Schulter

## Patentansprüche

1. Stützvorrichtung für Sattelanhänger mit einer Außenhülse und einer mittels einer Spindel (11) teleskopierbaren Innenhülse (8), an deren unteren Ende eine Fußaufnahmeeinrichtung (1) zum Befestigen eines Stützfußes angebracht ist,
wobei die Fußaufnahmeeinrichtung (1) ein die Innenhülse (8) abschließendes Bauelement umfaßt, **dadurch gekennzeichnet, daß** das Bauelement
- eine Öffnung (3) für den Durchtritt der Spindel (11),
- an ihrer Ober- und/oder Unterseite mindestens ein Versteifungselement (5,5a,b,6,6a,b) und
- gegenüberliegend zwei Lagerstellen (4a,4b) für den Stützfuß aufweist.

2. Stützvorrichtung nach Anspruch 1, **dadurch gekennzeichnet, daß** das Versteifungselement (5a,b,6a,b) innerhalb der Innenhülse (8) angeordnet ist.

3. Stützvorrichtung nach einem der Ansprüche 1 oder 2, **dadurch gekennzeichnet, daß** sich das Versteifungselement (5,5a,b,6,6a,b) mindestens zwischen den Lagerstellen (4a,b) erstreckt.

4. Stützvorrichtung nach einem der Ansprüche 1 bis 3, **dadurch gekennzeichnet, daß** das Bauelement eine Platte (2) und daß das Versteifungselement eine Versteifungsrippe (5a,b,6a,b) ist.

5. Stützvorrichtung nach einem der Ansprüche 1 bis 4, **dadurch gekennzeichnet, daß** die Versteifungsrippe (5a,b,6a,b) bogenförmig um die Öffnung (3) verläuft.

6. Stützvorrichtung nach einem der Ansprüche 1 bis 5, **dadurch gekennzeichnet, daß** die Platte (2) einen außerhalb der Versteifungsrippe (5a,b,6a,b) angeordneten Randabschnitt (7) zur Befestigung der Innenhülse (8) aufweist.

7. Stützvorrichtung nach einem der Ansprüche 1 bis 6, **dadurch gekennzeichnet, daß** die Lagerstellen (4a,b) in der Ebene der Platte (2) angeordnet sind.

8. Stützvorrichtung nach einem der Ansprüche 1 bis 7, **dadurch gekennzeichnet, daß** an der Oberseite der Platte (2) eine umlaufende Versteifungsrippe (5) angeordnet ist, die formschlüssig in die Innenhülse (8) eingreift, und
daß an der Unterseite eine umlaufende Rippe (6) angeordnet ist, die in eine eine Abdeckung (12) bildendes Bodenteil (13) übergeht.

9. Stützvorrichtung nach Anspruch 8, **dadurch gekennzeichnet, daß** die Fußaufnahmeeinrichtung (1) aus zwei spiegelbildlichen Hälften (1a,b) besteht.

10. Stützvorrichtung nach Anspruch 1, **dadurch gekennzeichnet, daß** das Bauelement ein senkrecht angeordnetes Rohr (15) ist, dessen Außendurchmesser mindestens in einem Abschnitt kleiner gleich dem Innendurchmesser der Innenhülse (8) ist.

11. Stützvorrichtung nach Anspruch 10, **dadurch gekennzeichnet, daß** das Rohr (15) ein Vierkantrohr ist.

12. Stützvorrichtung nach Anspruch 10 oder 11, **dadurch gekennzeichnet, daß** die Lagerstellen (4a,b) an der Außenseite des Rohres (15) befestigt sind.

13. Stützvorrichtung nach einem der Ansprüche 1 bis 7 oder 9 bis 12,
**dadurch gekennzeichnet, daß** die Öffnung (3) durch eine Abdeckung (12) verschlossen ist.

## Claims

1. A landing gear for semi-trailers, with an outer sleeve and an inner sleeve (8) that can be telescoped by means of a spindle (11) and on the lower end of which a sustainer receiving device (1) for mounting a sustainer is arranged, wherein the sustainer receiving device (1) comprises a structural element that forms the termination of the inner sleeve (8),
**characterized in that** the structural element contains
- an opening (3) for the spindle (11),
- at least one reinforcing element (5, 5a, b, 6, 6a, b) on its upper and/or lower side, and
- two opposing bearing points (4a, 4b) for the sustainer.

2. The landing gear according to Claim 1, **characterized in that** the reinforcing element (5a, b, 6a, b) is arranged within the inner sleeve (8).

3. The landing gear according to Claim 1 or 2, **characterized in that** the reinforcing element (5, 5a, b, 6, 6a, b) extends at least between the bearing points (4a, b).

4. The landing gear according to one of Claims 1-3, **characterized in that** the structural element consists of a plate (2), and **in that** the reinforcing element consists of a reinforcing rib (5a, b, 6a, b).

5. The landing gear according to one of Claims 1-4, **characterized in that** the reinforcing rib (5a, b, 6a, b) extends around the opening (3) in the shape of an arc.

6. The landing gear according to one of Claims 1-5, **characterized in that** the plate (2) contains an edge section (7) that serves for mounting the inner sleeve (8) and is arranged outside the reinforcing rib (5a, b, 6a, b).

7. The landing gear according to one of Claims 1-6, **characterized in that** the bearing points (4a, b) are arranged in the plane of the plate (2).

8. The landing gear according to one of Claims 1-7, **characterized in that** the upper side of the plate (2) contains a peripheral reinforcing rib (5) that positively engages into the inner sleeve (8), and **in**
**that** the lower side contains a peripheral rib (6) that transforms into a bottom part (13) that forms a cover (12).

9. The landing gear according to Claim 8, **characterized in that** the sustainer receiving device (1) consists of two mirror-inverted halves (1a, b).

10. The landing gear according to Claim 1, **characterized in that** the structural element consists of a vertically arranged pipe (15), the outside diameter of which is smaller than or equal to the inside diameter of the inner sleeve (8) in at least one section.

11. The landing gear according to Claim 10, **characterized in that** the pipe (15) consists of a square pipe.

12. The landing gear according to Claim 10 or 11, **characterized in that** the bearing points (4a, b) are mounted on the outer side of the pipe (15).

13. The landing gear according to one of Claims 1-7 or 9-12, **characterized in that** the opening (3) is closed with a cover (12).

## Revendications

1. Dispositif de soutien pour semi-remorques comportant un manchon extérieur et un manchon intérieur (8) télescopable au moyen d'une broche (11), à l'extrémité inférieure duquel est installé un dispositif récepteur de pied (1) pour la fixation d'un pied de soutien, le dispositif récepteur de pied (1) comprenant un élément de construction terminant le manchon intérieur (8), **caractérisé en ce que** l'élément de construction présente
- une ouverture (3) pour le passage de la broche (11),
- au moins un élément de rigidification (5, 5a, b, 6, 6a, b) sur sa face supérieure et/ou inférieure et
- en face deux points de paliers (4a, 4b) pour le pied de soutien.

2. Dispositif de soutien selon la revendication 1, **caractérisé en ce que** l'élément de rigidification (5, 5a, 6, 6a, b) est disposé à l'intérieur du manchon intérieur (8).

3. Dispositif de soutien selon l'une quelconque des revendications 1 ou 2, **caractérisé en ce que** l'élément de rigidification (5, 5a, 6, 6a, b) s'étend au moins entre les points de paliers (4a, b).

4. Dispositif de soutien selon l'une quelconque des revendications 1 à 3, **caractérisé en ce que** l'élément de construction est une plaque (2) et que l'élément de rigidification est une cannelure de rigidification (5a, b, 6a, b).

5. Dispositif de soutien selon l'une quelconque des revendications 1 à 4, **caractérisé en ce que** la cannelure de rigidification (5a, b, 6a, b) s'étend en forme arquée autour de l'ouverture (6).

6. Dispositif de soutien selon l'une quelconque des revendications 1 à 5, **caractérisé en ce que** la plaque (2) présente une section de bord (7) disposée à l'extérieur de la cannelure de rigidification (5a, b, 6a, b) pour la fixation du manchon intérieur (8).

7. Dispositif de soutien selon l'une quelconque des revendications 1 à 6, **caractérisé en ce que** les points de paliers (4a, b) sont disposés dans le plan de la plaque (2).

8. Dispositif de soutien selon l'une quelconque des revendications 1 à 7, **caractérisé en ce qu'**est disposée sur la face supérieure de la plaque (2) une cannelure de rigidification périphérique (5) qui s'engrène par liaison de forme dans le manchon intérieur (8), et
que sur la face inférieure est disposée une cannelure de rigidification périphérique (6) qui transite dans une pièce de fond (13) formant un recouvrement (12).

9. Dispositif de soutien selon la revendication 8, **caractérisé en ce que** le dispositif récepteur du pied (1) consiste en deux moitiés (1a, b) symétriques en miroir.

10. Dispositif de soutien selon la revendication 1, **caractérisé en ce que** l'élément de construction est un tuyau disposé verticalement (15) dont le diamètre extérieur est, au moins dans une section, inférieur ou égal au diamètre intérieur du manchon intérieur (8).

11. Dispositif de soutien selon la revendication 10, **caractérisé en ce que** le tuyau (15) est un tuyau à quatre pans.

12. Dispositif de soutien selon la revendications 10 ou 11, **caractérisé en ce que** les points de paliers (4a, b) sont fixés sur la face extérieure du tuyau (15).

13. Dispositif de soutien selon l'une quelconque des revendications 1 à 7 ou 9 à 12, **caractérisé en ce que** l'ouverture (3) est fermée par un recouvrement (12).
